(19) **Europäisches Patentamt / European Patent Office / Office européen des brevets**

(11) **EP 4 550 893 A1**

(12) **EUROPEAN PATENT APPLICATION**

(43) Date of publication:
**07.05.2025 Bulletin 2025/19**

(21) Application number: **24208400.2**

(22) Date of filing: **23.10.2024**

(51) International Patent Classification (IPC):
**H04W 48/18** (2009.01)

(52) Cooperative Patent Classification (CPC):
**H04W 48/18;** H04W 36/322; H04W 64/003;
H04W 88/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 KR 20230150297
01.02.2024 KR 20240016222
12.04.2024 KR 20240049401**

(71) Applicant: **Samsung Electronics Co., Ltd.
Suwon-si, Gyeonggi-do 16677 (KR)**

(72) Inventors:
• **KWON, Yangsoo**
16677 Suwon-si (KR)
• **MOON, Jonggun**
16677 Suwon-si (KR)
• **CHOI, Seungjin**
16677 Suwon-si (KR)
• **CHOI, Yoojin**
16677 Suwon-si (KR)
• **KIM, Jinho**
16677 Suwon-si (KR)
• **HAN, Woongjae**
16677 Suwon-si (KR)

(74) Representative: **Marks & Clerk LLP
15 Fetter Lane
London EC4A 1BW (GB)**

(54) **USER EQUIPMENT SUPPORTING PLURALITY OF RADIO ACCESS TECHNOLOGIES AND OPERATION METHOD THEREOF**

(57)    A user equipment (UE) supporting a first radio access technology (RAT) network and a second RAT network, the UE includes processing circuitry configured to monitor whether a position of the UE has changed from a first position to obtain a monitoring result, a network connected to the UE switching from the first RAT network to the second RAT network based on the UE moving to the first position, and perform a re-connection operation to the first RAT network based on the monitoring result.

FIG. 4

```
START
  |
  v
SWITCH FROM FIRST RAT NETWORK TO SECOND
RAT NETWORK ACCORDING TO MOVEMENT OF     — S100
UE TO PARTICULAR POSITION
  |
  v
MONITOR CHANGE IN POSITION OF UE FROM    — S110
PARTICULAR POSITION
  |
  v
PERFORM RE-CONNECTION OPERATION TO FIRST — S120
RAT NETWORK BASED ON MONITORING RESULT
  |
  v
PERFORM COMMUNICATION BY BEING           — S130
RE-CONNECTED TO FIRST RAT NETWORK
  |
  v
END
```

EP 4 550 893 A1

**Description**

BACKGROUND

The inventive concepts relate to wireless communication, and more particularly, to a user equipment (UE) supporting a plurality of radio access technologies (RATs) and an operation method thereof.

Recently, UEs for wireless communication may support various RATs, such as a 3rd generation (3G) network, a 4th generation (4G) (or long term evolution (LTE)) network, and a 5th generation (5G) network.

When a UE moves to a particular position while performing communication using a first RAT network, the UE may switch to a second RAT network that is available because the first RAT network is temporarily unavailable. The UE may perform communication using the second RAT network at the particular position and also repeatedly perform an operation for returning to the first RAT network (e.g., a re-connection operation to the first RAT network). When the UE continuously stays at the particular position, the operation for returning to the first RAT network may cause excessive power consumption.

SUMMARY

The inventive concepts provide a user equipment (UE) for efficiently performing a re-connection operation to a previously used radio access technology (RAT) network by confirming a change in the position of a user, in scenarios in which the previously used RAT network being switched to a different RAT network due to movement of the user to a particular position, and a method of operating the same.

According to an aspect of the inventive concepts, there is provided a UE supporting a first RAT network and a second RAT network, the UE including processing circuitry configured to monitor whether a position of the UE has changed from a first position to obtain a monitoring result, a network connected to the UE switching from the first RAT network to the second RAT network based on the UE moving to the first position, and perform a re-connection operation to the first RAT network based on the monitoring result.

For instance, according to an embodiment there is provided a UE configured to communicate with a first RAT network and a second RAT network, wherein the UE includes processing circuitry configured to the processing circuitry may be configured to monitor whether a position of the UE has changed from a first position to obtain a monitoring result, wherein the first position is a position at which a network connected to the UE switched from the first RAT network to the second RAT network, and perform a re-connection operation to the first RAT network based on the monitoring result.

For instance, according to an embodiment, the processor is configured to determine whether the network connected to the UE has switched from the first RAT to the second RAT at a first position, and in response to said determination, monitor whether the position of the UE changes from the first position. In response to the position of the UE changing from the first position, the processor may be configured to perform a re-connection operation to the first RAT. The re-connection operation may make use of one or more configuration parameters (connection history information) that were used during connection to the first RAT network prior to the network connected to the UE being switched to the second RAT network.

According to an aspect of the inventive concepts, there is provided an operation method of a UE supporting a first RAT network and a second RAT network, the method including switching from the first RAT network to the second RAT network based on the UE moving to a first position, the switching including switching communication from a first base station to a second base station, the first base station being based on the first RAT network, and the second base station being based on the second RAT network, monitoring whether a position of the UE has changed to obtain a monitoring result, and performing a re-connection operation to the first RAT network based on the monitoring result.

According to an aspect of the inventive concepts, there is provided an operation method of a UE, the method including performing communication based on a primary radio access technology (RAT) network in a normal state, switching from the primary RAT network to a secondary RAT network based on the UE moving to a first position, transitioning from the normal state to a switch state based on the switching, monitoring whether the UE has left the first position in the switch state to obtain a monitoring result, and determining whether to transition from the switch state to a re-connectable state based on the monitoring result, the re-connectable state being a state for a re-connection operation to the primary RAT network.

At least some of the above and other features of the invention are set out in the claims.

BRIEF DESCRIPTION OF THE DRAWINGS

Embodiments of the inventive concepts will be more clearly understood from the following detailed description taken in conjunction with the accompanying drawings in which:

FIG. 1 illustrates a wireless communication system according to embodiments;

FIGS. 2A and 2B are block diagrams illustrating a user equipment (UE) according to embodiments;

FIG. 3 illustrates states of a UE according to embodiments;

FIG. 4 is a flowchart illustrating an operation method of a UE, according to embodiments;

FIGS. 5A to 5D are flowcharts particularly illustrating operations S110 and S120 of FIG. 4;

FIG. 6 is a flowchart particularly illustrating operation S130 of FIG. 4;

FIG. 7 is a signaling diagram illustrating an operation method between a processor included in a UE and a position change confirmation model executed by the processor, according to embodiments;

FIG. 8 illustrates an architecture of the position change confirmation model of FIG. 7;

FIGS. 9A and 9B illustrate a monitoring operation using a position change confirmation model, according to embodiments;

FIG. 10 is a flowchart illustrating a method of training a position change confirmation model, according to embodiments;

FIG. 11 is a flowchart illustrating an operation method of a UE, according to embodiments;

FIGS. 12A and 12B are flowcharts particularly illustrating operations S410 and S420 of FIG. 11;

FIG. 13 illustrates an operation method of a UE, according to embodiments;

FIGS. 14A and 14B are tables referred to describe the operation method, of FIG. 13, of a UE;

FIG. 15 is a signaling diagram illustrating an operation method between a processor included in a UE and a position change confirmation model executed by the processor, according to embodiments;

FIG. 16 is a flowchart particularly illustrating operation S540 of FIG. 15; and

FIG. 17 is a conceptual diagram illustrating an Internet of Things (IoT) network system, according to embodiments.

## DETAILED DESCRIPTION

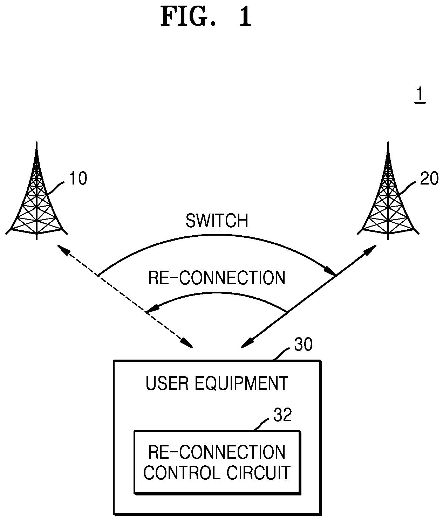

FIG. 1 illustrates a wireless communication system 1 according to embodiments. The wireless communication system 1 may provide a communication service based on a plurality of radio access technology (RAT) networks to a user equipment (UE) 30. For example, the wireless communication system 1 may provide a communication service based on at least two types of networks among a 3rd generation (3G) network, a 4th generation (4G) network, a wireless broadband (Wibro) network, a global system for mobile communication (GSM) network, a 5th generation (5G) network, a 6th generation (6G) network, and the like.

In addition, various functions described below may be implemented or supported by the artificial intelligence technology or one or more computer programs, and each of the computer programs is composed of computer-readable program codes and is executed in a non-transitory computer-readable medium. The terms "application" and "program" indicate one or more computer programs, software components, instruction sets, procedures, functions, objects, classes, instances, relevant data, or some thereof suitable for implementation of appropriate computer-readable program codes. The term "computer-readable program codes" includes all types of computer codes including source code, object code, and execution code. The term "computer-readable medium" includes every type of non-transitory computer-readable medium accessible by a computer, such as read only memory (ROM), random access memory (RAM), a hard disk drive, a compact disc (CD), a digital video disc (DVD), or any other type of memory. A "non-transitory" computer-readable medium excludes transitory wired, wireless, optical, or other communication links through which electrical or other signals are transmitted. The non-transitory computer-readable medium includes a medium in which data is permanently stored and a medium in which data is stored and is overwritten by other data later, such as a rewritable optical disc or an erasable memory device.

Embodiments described below employ a hardware-based access method as an example. However, because embodiments include a technology using both hardware and software, embodiments do not exclude a software-based access method.

Referring to FIG. 1, the wireless communication system 1 may include a first base station 10, a second base station 20, and/or the UE 30. A base station may be generally referred to as a fixed station communicating with the UE 30, and may exchange control information and data by communicating with the UE 30. For example, a base station may be variously referred to as a Node B, an evolved-Node B (eNB), a next generation Node B (gNB), a sector, a site, a base transceiver system (BTS), an access point (AP), a relay node, a remote radio head (RRH), a radio unit (RU), a small cell, a wireless device, a device, or the like.

The UE 30 may be referred to as a device which is stationary or has mobility, and transmits and receives data and/or control information by communicating with the first base station 10 and/or the second base station 20. For example, the UE 30 may be referred to as a terminal, a terminal equipment, a mobile station (MS), a mobile terminal (MT), a user terminal (UT), a subscribe station (SS), a wireless communication device, a wireless device, a device, a handheld device, or the like.

The first base station 10 may be connected to the UE 30 within a first coverage and provide a first RAT network-based communication service to the UE 30. The second base station 20 may be connected to the UE 30 within a second coverage and provide a second RAT network-based communication service to the UE 30. In embodiments, the first base station 10 and the second base station 20 may be physically integrated to one base station, and the integrated base station may be implemented to support the first RAT network-based communication service and the second RAT network-based communication service.

Hereinafter, the first RAT network may correspond to a primary RAT network, which the UE 30 primarily uses (e.g., a higher priority RAT network), and the second RAT network may correspond to a secondary RAT network (e.g., a lower priority RAT network) temporarily available instead of the primary RAT network in a situation in which the primary RAT network is not available. For example, the primary RAT network may be configured according to a request of a user of the UE 30 and the secondary RAT network may be configured according to a request of an operator that provides a communication service or the user.

When the UE 30 moves to a particular position (also referred to herein as a first position) while performing first RAT network-based communication with the first base station 10 by being connected to the first base station 10, the first RAT network may be not available such that the connection to the first base station 10 is unintentionally disconnected (e.g., due to insufficient signal quality and/or strength). The UE 30 may attempt a connection to the second base station 20 in response to the disconnection from the first base station 10 and perform second RAT network-based communication by being connected to the second base station 20. The UE 30 may switch a network connected to the UE 30 from the first RAT network to the second RAT network due to the movement of the UE 30 to a particular position. In the specification, connection of the UE 30 to a network may be analyzed as connection of the UE 30 to a base station that provides the network. In addition, in the specification, a particular position may be defined as a position where switch from the primary RAT network to the secondary RAT network is caused, or a position where the primary RAT network is not available, and the particular position may inclusively mean a particular point or area. A particular position may depend on the type of the primary RAT network. For example, a particular position when the primary RAT network is a 5G network may differ from a particular position when the primary RAT network is a 4G network. As an example to aid understanding, when the primary RAT network is a 5G network, a particular position may include the inside of an elevator, emergency stairs inside a building, or the like.

In embodiments, the UE 30 may include a re-connection control circuit 32. The re-connection control circuit 32 may perform an operation for re-connecting, to the first RAT network that was previously connected, from the second RAT network temporarily connected due to movement of the UE 30 to a particular position.

In embodiments, the re-connection control circuit 32 may monitor a change in the position of the UE 30 from the particular position and perform a re-connection operation to the first RAT network based on the monitoring result. As a particular example, the re-connection control circuit 32 may start a re-connection operation to the first RAT network when confirming that the UE 30 has left the particular position, e.g., when confirming that the UE 30 has moved to a position (e.g. a normal position) where the first RAT network that is the primary RAT network is available.

The re-connection control circuit 32 may monitor a change in the position of the UE 30 from the particular position in various manners.

For example, the re-connection control circuit 32 may monitor a change in the position of the UE 30 by using radio frequency (RF) signals received from the second base station 20. As a particular example, the re-connection control circuit 32 may monitor a change in the position of the UE 30 based on the values of a plurality of indicators, which are generated using RF signals received from the second base station 20. In embodiments, the plurality of indicators are associated with the second RAT network, e.g., the secondary RAT network, and may include indicators suitable to monitor a change in the position of the UE 30. For example, the plurality of indicators may include at least one of a global cell identifier (ID), a physical cell ID, a frequency band, a bandwidth, received signal received power (RSRP), reference signal received quality (RSRQ), a received signal strength indicator (RSSI), a signal to interference plus noise ratio (SINR), a number of resource blocks, a channel quality indicator (CQI), a rank indicator (RI), a precoding matrix indicator (PMI), a modulation and coding scheme (MCS), a modulation order, a block error rate (BLER), transmission power, a Doppler frequency, and/or a delay spread. In the specification, monitoring a change in the position of the UE 30 by using RF signals may include monitoring a change in the position of the UE 30 based on baseband signals generated through frequency down-conversion of the RF signals. In addition, in the specification, generating the values of a plurality of indicators by using RF signals may include generating the values of the plurality of indicators based on baseband signals generated through frequency down-conversion of the RF signals.

As another example, the re-connection control circuit 32 may monitor a change in the position of the UE 30 by using a plurality of sensors included in the UE 30. As a particular example, because the plurality of sensors perform a sensing operation related to movement of the UE 30, the re-connection control circuit 32 may monitor a change in the position of the UE 30 based on a plurality of sensing values generated using the plurality of sensors. For example, the plurality of sensors may include at least one of a gyroscope (gyro) sensor, an acceleration sensor, a linear acceleration sensor, and/or a geomagnetic sensor. Particularly, the re-connection control circuit 32 may confirm movement of the UE 30 through the plurality of sensors and determine, based on the confirmed movement, whether the position of the UE 30 has changed.

As another example, the re-connection control circuit 32 may monitor a change in the position of the UE 30 by using RF signals received from the second base station 20 and the plurality of sensors. As a particular example, the re-connection control circuit 32 may monitor a change in the position of the UE 30 by simultaneously (or contemporaneously) or sequentially using the values of a plurality of indicators, which are generated using RF signals received from the second base station 20, and a plurality of sensing values generated using the plurality of sensors.

In embodiments, the re-connection control circuit 32 may use a position change confirmation model based on a neural network (NN) to monitor a change in the position of the UE 30. For example, the re-connection control circuit 32 may input data including collected values to the position change confirmation model (e.g. a position change confirmation neural network) and determine, based on an output of the position change confirmation model, whether the UE 30 has left a particular position. The collected values may include at least one of the values of the plurality of indicators described above and at least one of the plurality of sensing values described above.

In the specification, a re-connection operation to the first RAT network may be analyzed as a connection operation to a base station that provides the first RAT network. That is, a re-connection operation to the first RAT network may include a re-connection operation to the first base station 10 that was previously connected or a connection operation to a different base station that provides the first RAT network. Hereinafter, a re-connection operation to the first RAT network is described based on an example corresponding to a re-connection operation to the first base station 10 that was previously connected.

In embodiments, the re-connection control circuit 32 may attempt a re-connection to the first RAT network, e.g., a re-connection to the first base station 10, based on connection history information when confirming that the UE 30 has left a particular position. For example, the connection history information may include pieces of information, which the UE 30 has previously exchanged with the first base station 10 for a connection to the first base station 10. As a particular example, the connection history information may include information about the first base station 10. In embodiments, the re-connection control circuit 32 may actively request the first base station 10 for re-connection based on the connection history information. In embodiments, the re-connection control circuit 32 may provide, to the first base station 10, information required (or otherwise used) for re-connection such that the UE 30 is relatively easily re-connected to the first base station 10.

The aforementioned operations of the re-connection control circuit 32 may be analyzed as operations of the UE 30, and the re-connection control circuit 32 may be implemented by software executed by a processor of the UE 30 or hardware in the processor of the UE 30.

The UE 30 according to embodiments may confirm whether the UE 30 has left a particular position and then start a re-connection operation to the primary RAT network when a network connected to the UE 30 switches from the primary RAT network to the secondary RAT network due to movement of the UE 30 to the particular position, thereby minimizing or reducing excessive power consumption.

The UE 30 according to embodiments may monitor a change in the position of the UE 30 by using RF signals based on the secondary RAT network or the plurality of sensors included in the UE 30, thereby effectively determining whether the UE 30 has left a particular position.

In addition, the UE 30 according to embodiments may use the position change confirmation model based on an NN to monitor a change in the position of the UE 30, thereby accurately determining whether the UE 30 has left a particular position.

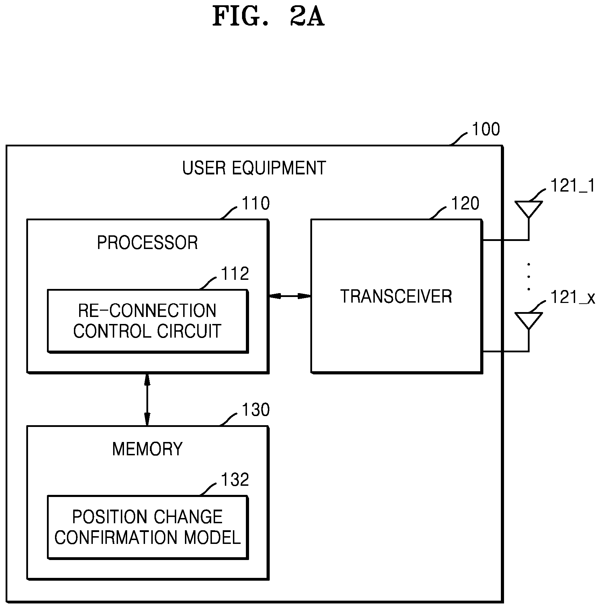

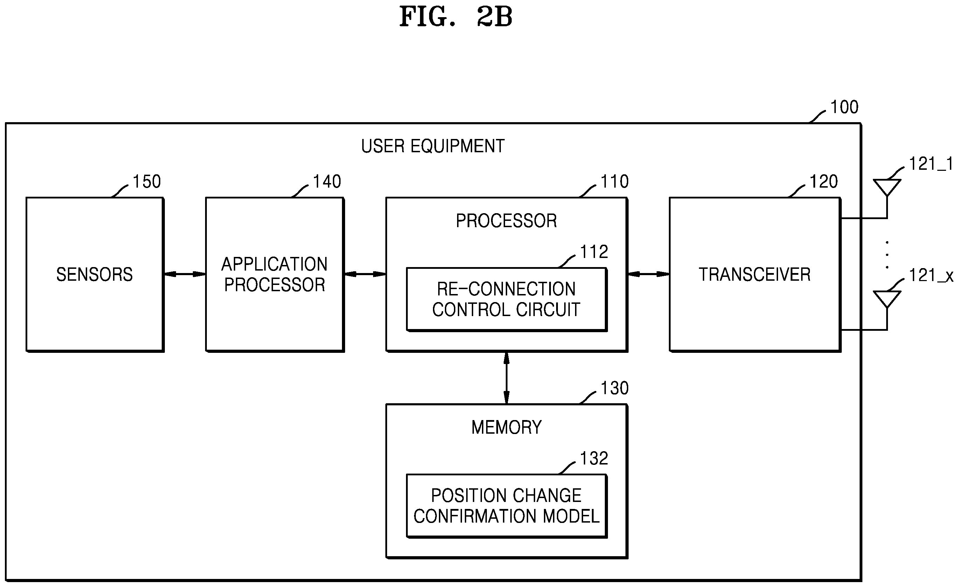

FIGS. 2A and 2B are block diagrams illustrating a UE 100 according to embodiments.

Referring to FIG. 2A, the UE 100 may include a processor 110, a transceiver 120, a memory 130, and/or a plurality of antennas 121_1 to 121_x.

The transceiver 120 may receive RF signals transmitted from a base station, through the plurality of antennas 121_1 to 121_x. The transceiver 120 may down-convert the received RF signals to generate intermediate frequency signals or baseband signals. The processor 110 may acquire data by performing a processing operation of filtering, decoding, and/or digitizing the intermediate frequency signals or the baseband signals and generate data for communication with the base station based on the acquired data.

In addition, the processor 110 may encode, multiplex, and/or analogize (e.g., perform digital to analog conversion) the generated data to provide the intermediate frequency signals or the baseband signals to the transceiver 120. The transceiver 120 may frequency-up-convert the intermediate frequency signals or the baseband signals to transmit RF signals to the base station through the plurality of antennas 121_1 to 121_x.

In embodiments, the processor 110 may include a re-connection control circuit 112, and/or the memory 130 may store a position change confirmation model 132 based on an NN. The position change confirmation model 132 may be executed by the processor 110 and used to monitor a change in the position of the UE 100 from a particular position. According to embodiments, the re-connection control circuit 112 may be the same as or similar to the re-connection control circuit 32 discussed in connection with FIG. 1.

When the UE 100 moves to the particular position, a connection of the UE 100 to the first RAT network may be disconnected and the UE 100 may be temporarily connected to the second RAT network. In this case, the processor 110 may perform a re-connection operation to the first RAT network by using the re-connection control circuit 112 and the position change confirmation model 132. For instance, the processor 110 may perform a re-connection operation to the first RAT network by using the re-connection control circuit 112 in response to determining, using the position change confirmation model 132, that the UE 100 has left the particular position.

In embodiments, RF signals based on the second RAT network may be received through the plurality of antennas 121_1 to 121_x and the transceiver 120, and the re-connection control circuit 112 may monitor a change in the position of the UE 100 based on the values of a plurality of indicators, which are generated using the RF signals.

As a particular example, the re-connection control circuit 112 may provide, to the position change confirmation model 132, an input including first data periodically generated in a period in which communication based on the second RAT network is performed or second data generated by filtering of the first data and determine, based on an output of the position change confirmation model 132, whether the UE 100 has left the particular position. For example, the first data may include at least one of the values of the plurality of indicators described above and the second data may include a variation between past data of the first data and current data of the first data. The second data may be defined by [Equation 1] below.

[Equation 1]

$$Y(k) = X(k) - X(k-1)$$

Y(k) may denote second data at a time k, X(k) may denote first data generated or obtained at the time k, and X(k - 1) may denote first data generated or obtained at a time k-1. Filtering of the first data to determine an output of the position change confirmation model 132 may be otherwise known as determining a differential, variation and/or rate of change of the first data over time.

However, because a filtering scheme for the first data based on [Equation 1] is only an example, the inventive concepts are not limited thereto, and the second data may be generated by applying various filtering schemes to the first data.

In embodiments, the re-connection control circuit 112 may start a re-connection operation to the first RAT network when an output of the position change confirmation model 132 indicates that the UE 100 has left the particular position. As a particular example, the re-connection control circuit 112 may generate signals for a re-connection to a first base station, which was previously connected, based on connection history information stored in the memory 130 and transmit the generated signals to the first base station through the transceiver 120 and the plurality of antennas 121_1 to 121_x.

In embodiments, the position change confirmation model 132 may employ one or more neural networks having one or more of the following NN architectures: a multilayer perceptron (MLP) architecture, a convolutional neural network (CNN) architecture, a region with convolution neural network (R-CNN) architecture, a region proposal network (RPN) architecture, a recurrent neural network (RNN) architecture, a stacking-based deep neural network (S-DNN) architecture, a state-space dynamic neural network (S-SDNN) architecture, a deconvolution network architecture, a deep belief network (DBN) architecture, a restricted Boltzmann machine (RBM) architecture, a fully convolution network architecture, a classification network architecture, a plain residual network architecture, a dense network architecture, a hierarchical pyramid network architecture, a transformer architecture, a long short-term memory (LSTM) architecture, and the like.

In embodiments, the position change confirmation model 132 may be stored in the memory 130 in a state of being offline-trained using previously collected data. That is, the position change confirmation model 132 may have previously been trained using training data. The training may configure the position change confirmation model 132 to output a probability that the UE 100 has left the particular position. The probability may be utilized to determine whether the UE 100 has left the particular position (e.g. based on whether the probability exceeds a threshold). Different methods of training may be applied to produce the position change confirmation model 132, such as supervised learning, unsupervised learning, and/or reinforcement learning.

In embodiments, the position change confirmation model 132 may be continuously updated by being online-trained using data measured in real-time by the UE 100. That is, the processor 110 may be configured to update one or more parameters of the position change confirmation model 132 based on inputs to and outputs from the position change confirmation model 132 to train (e.g. further train) the position change confirmation model 132.

Referring to FIG. 2B, compared to FIG. 2A, the UE 100 may further include an application processor 140 and/or a plurality of sensors 150.

In embodiments, the plurality of sensors 150 may perform a sensing operation related to movement of the UE 100. As a particular example, the plurality of sensors 150 may include at least one of a gyro sensor, an acceleration sensor, a linear acceleration sensor, and/or a geomagnetic sensor.

In embodiments, the re-connection control circuit 112 may use only sensing values generated by the plurality of sensors 150 or both the sensing values and the values of the plurality of indicators described with reference to FIG. 2A, to monitor a change in the position of the UE 100 from a particular position. For example, the re-connection control circuit 112 may receive the sensing values through the application processor 140 connected to the plurality of sensors 150. In embodiments, the re-connection control circuit 112 may directly receive the sensing values from the plurality of sensors 150 (e.g., without the sensing values being provided to the application processor 140).

As a particular example, the re-connection control circuit 112 may provide, to the position change confirmation model 132, an input including first data periodically generated in a period in which communication based on the second RAT network is performed or second data generated by filtering of the first data and determine, based on an output of the position change confirmation model 132, whether the UE 100 has left the particular position. For example, the first data may include at least one of the plurality of sensing values described above and the second data may include a variation between past data of the first data and current data of the first data.

When the re-connection control circuit 112 monitors a change in the position of the UE 100 by using the values of the plurality of indicators described above and the plurality of sensing values described above, the first data input to the position change confirmation model 132 may include at least one of the values of the plurality of indicators described above and at least one of the plurality of sensing values described above.

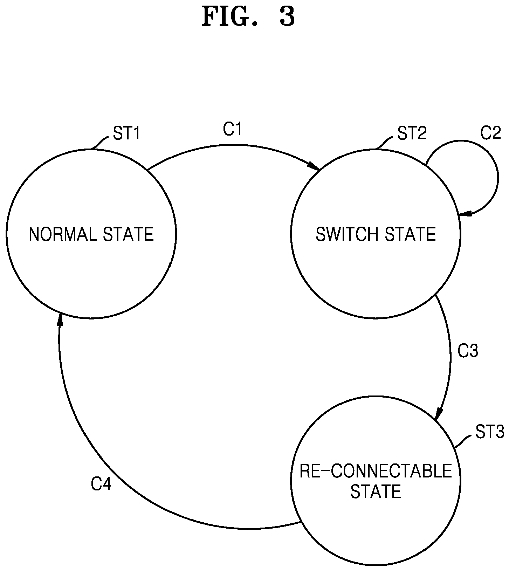

FIG. 3 illustrates states of a UE according to embodiments.

Referring to FIG. 3, the states of the UE may include a normal state ST1, a switch state ST2, and a re-connectable state ST3.

First, the UE may perform communication using the first RAT network that is the primary RAT network in the normal state ST1. The UE in the normal state ST1 may stay at a normal position (otherwise known as a first position). That is, the UE in the normal state ST1 may stay at a position in which it may continue to communicate with the first RAT network. The UE in the normal state may move, but may continue to be connected to the first RAT network (e.g. may continue to be at positions where communication with the first RAT network is possible).

When satisfying a first condition C1 that the UE moves from the normal position to a particular position (otherwise known as a second position), the state of the UE may transition from the normal state ST1 to the switch state ST2. The particular position (the second position) may be a position at which the first RAT network is not available. Because the first RAT network is not available in the switch state ST2, the UE may be temporarily connected to the second RAT network that is the secondary RAT network. The UE in the switch state ST2 may stay at the particular position. The UE in the switch state ST2 may perform a monitoring operation to determine whether the UE has left the particular position. For example, the UE may monitor a change in the position of the UE based on at least one of movement of the UE and signals based on the second RAT network (or signals received from a second base station that provides the second RAT network). The movement of the UE may be recognized through a plurality of sensors included in the UE.

When satisfying a second condition C2 that it is determined that the UE still stays at the particular position, the UE may maintain the switch state ST2.

The UE may block an operation for a re-connection to the first RAT network in the switch state ST2. That is, the UE may efficiently use power by minimizing or reducing an unnecessary operation (e.g. an unnecessary re-connection operation) at the particular position.

When satisfying a third condition C3 that it is determined that the UE has left the particular position, e.g., when it is confirmed that the UE has moved to a normal position (e.g. moved to a position at which the first RAT network is available), the state of the UE may transition from the switch state ST2 to the re-connectable state ST3. The UE in the re-connectable state ST3 may start a re-connection operation to the first RAT network. For example, the UE in the re-connectable state ST3 may actively request a first base station, which was previously connected, for re-connection based on connection history information.

When determining whether the UE has moved to a normal position, it may be determined whether the UE has moved to a position at which the first RAT network is available. This position may be the same as a previously occupied position (e.g. a position occupied in normal state ST1), or may be another position at which the first RAT network is available. Alternatively, it may be determined whether the UE has moved from the predetermined position to another position.

When satisfying a fourth condition C4 that the UE is re-connected to the first RAT network, the state of the UE may transition from the re-connectable state ST3 to the normal state ST1.

The UE according to embodiments may intensively perform a re-connection operation to the primary RAT network in the re-connectable state ST3, and by doing this, the UE may be effectively re-connected to the primary RAT network with less power consumption.

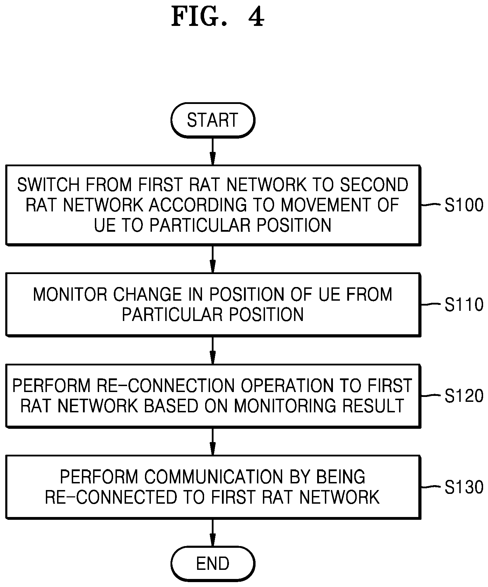

FIG. 4 is a flowchart illustrating a method of operating a UE, according to embodiments.

Referring to FIG. 4, in operation S100, a connected network may switch from the first RAT network to the second RAT network according to movement of the UE to a particular position. As a particular example, because the first RAT network being used as the primary RAT network is not available according to movement of the UE to the inside of an elevator that is the particular position, the UE may be temporarily connected to the second RAT network that is the secondary RAT network.

7

In operation S110, the UE may monitor a change in the position of the UE from the particular position. As a particular example, the UE may perform a monitoring operation to determine whether the UE has moved from the inside of the elevator to the outside of the elevator. The UE may perform a monitoring operation based on at least one of the values of a plurality of indicators, which are generated using RF signals received from a second base station of the second RAT network, and/or a plurality of sensing values generated from a plurality of sensors of the UE. Furthermore, the UE may use a position change confirmation model based on an NN when performing a monitoring operation.

In operation S120, the UE may perform a re-connection operation to the first RAT network based on the monitoring result of operation S110. As a particular example, if it is determined that the UE continuously stays at the particular location (e.g. inside the elevator), the UE may not attempt a re-connection operation to the first RAT network. In addition, if it is determined that the UE has moved from the inside of the elevator to the outside of the elevator, the UE may start a re-connection operation to the first RAT network. The UE may be re-connected to the first RAT network by performing a re-connection operation to a first base station, which was previously connected, based on connection history information. In embodiments, if it is difficult or not possible for the UE to be connected to the first base station in a re-connection operation to the first RAT network, the UE may be re-connected to the first RAT network by performing a connection operation to a new base station that provides the first RAT network.

In operation S130, the UE may perform communication by being re-connected to the first RAT network. According to embodiments, the UE 100 may generate a first signal (e.g., using the processor of the UE 100), process the first signal to perform one or more among modulating, upconverting, filtering, amplifying and/or encrypting on the first signal (e.g., according to the processing described above in connection with FIG. 2A), and transmit the processed first signal to the first base station via one or more among the plurality of antennas 121_1 to 121_x. Additionally or alternatively, the UE 100 may receive a second signal from the first base station via one or more among the plurality of antennas 121_1 to 121_x, process the second signal to perform one or more among demodulating, downconverting, filtering, amplifying and/or decrypting on the second signal (e.g., according to the processing described above in connection with FIG. 2A), and perform a further operation(s) based on the processed second signal. For example, the further operation(s) may include one or more of providing the processed second signal to a corresponding application executing on the UE 100, storing the processed second signal (e.g., in the memory 130), sending a response signal to the first base station, etc.

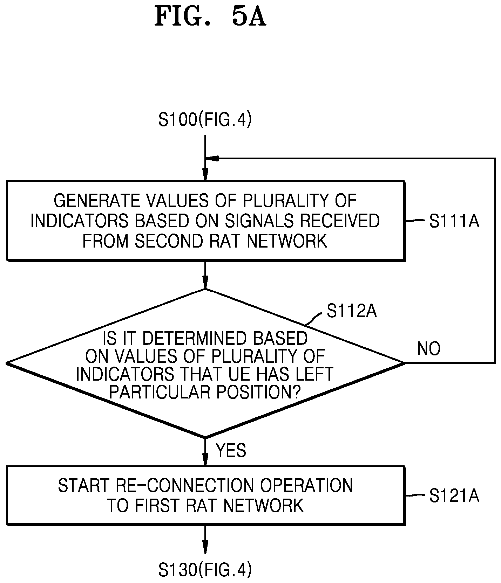

FIGS. 5A to 5D are flowcharts particularly illustrating operations S110 and S120 of FIG. 4.

Referring to FIG. 5A, in operation S1 11A, the UE may generate the values of a plurality of indicators based on signals received from the second RAT network. As a particular example, the UE may generate the values of the plurality of indicators based on RF signals received from the second base station in a period in which the UE is temporarily connected to the second base station and performs communication based on the second RAT network. For example, the values of the plurality of indicators may include at least one of a global cell ID, a physical cell ID, a frequency band, a bandwidth, RSRP, RSRQ, an RSSI, an SINR, the number of resource blocks, a CQI, an RI, a PMI, an MCS, a modulation order, a BLER, transmission power, a Doppler frequency, and/or a delay spread. As a particular example, the UE may generate the values of indicators related to the intensity of a reception signal based on reference signals included in the received RF signals.

In operation S112A, the UE may determine whether the UE has left the particular position, based on the values of the plurality of indicators. As a particular example, the UE may determine that the UE has left the particular position if a first latent vector indicating the feature of data including the values of the plurality of indicators is greater than a first threshold previously determined to monitor a change in the position of the UE. As another example, the UE may perform computation based on the values of the plurality of indicators and a first computation algorithm and determine that the UE has left the particular position if the computation result is greater than the first threshold. However, because this is only an example, the inventive concepts are not limited thereto, and the UE may determine that the UE has left the particular position if the first latent vector or the computation result is less than or equal to the first threshold.

If operation S112A is 'NO', the UE may perform operation S111A again to newly generate (or update) the values of the plurality of indicators and may perform operation S112A again based on the newly generated (or updated) values of the plurality of indicators. That is, the UE may monitor a change in the position of the UE based on periodically generated values of the plurality of indicators until confirming that the UE has left the particular position.

If operation S112A is 'YES', in operation S121A, the UE may start a re-connection operation to the first RAT network. That is, the UE may perform a re-connection operation to the first RAT network after confirming that the UE has left the particular position.

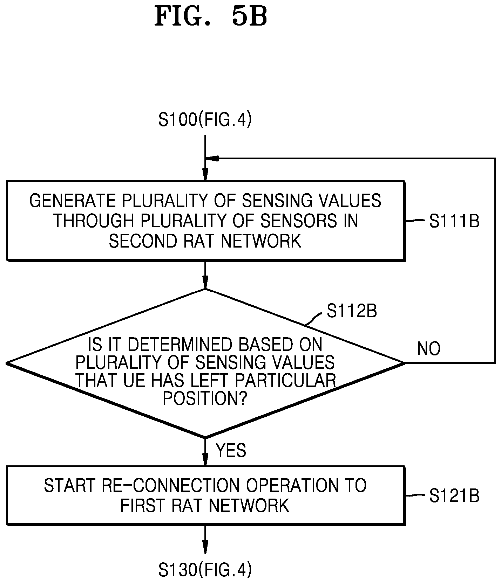

Referring to FIG. 5B, in operation S111B, the UE may generate a plurality of sensing values through the plurality of sensors when the UE is connected to the second RAT network. As a particular example, the UE may generate the plurality of sensing values by using the plurality of sensors configured to perform a sensing operation related to movement of the UE, in a period in which the UE is temporarily connected to the second base station and performs communication based on the second RAT network. For example, the plurality of sensors may include at least one of a gyro sensor, an acceleration sensor, a linear acceleration sensor, and/or a geomagnetic sensor.

In operation S112B, the UE may determine whether the UE has left the particular position, based on the plurality of sensing values. As a particular example, the UE may determine that the UE has left the particular position if a second latent vector indicating the feature of data including the plurality of sensing values is greater than a second threshold previously determined to monitor a change in the position of the UE. As another example, the UE may perform computation based on the plurality of sensing values and a second computation algorithm and determine that the UE has left the particular position if the computation result is greater than the second threshold. However, because this is only an example, the inventive concepts are not limited thereto, and the UE may determine that the UE has left the particular position if the second latent vector or the computation result is less than or equal to the second threshold.

If operation S112B is 'NO', the UE may perform operation S111B again to newly generate (or update) the plurality of sensing values and may perform operation S112B again based on the newly generated (or updated) plurality of sensing values. That is, the UE may monitor a change in the position of the UE based on a periodically generated plurality of sensing values until confirming that the UE has left the particular position.

If operation S112B is 'YES', in operation S121B, the UE may start a re-connection operation to the first RAT network.

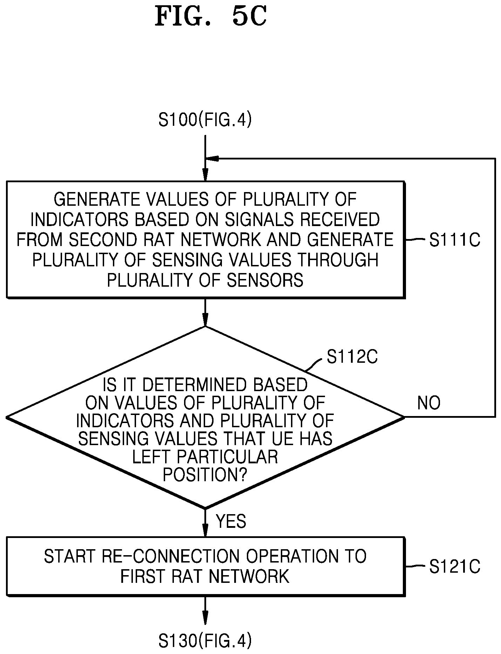

Referring to FIG. 5C, in operation S111C, the UE may generate the values of a plurality of indicators based on signals received from the second RAT network and generate a plurality of sensing values through the plurality of sensors. As a particular example, the UE may generate the values of the plurality of indicators described with reference to FIG. 5A and the plurality of sensing values described with reference to FIG. 5B, in a period in which the UE is temporarily connected to the second base station and performs communication based on the second RAT network. In embodiments, the UE may generate the values of the plurality of indicators and the plurality of sensing values in a parallel manner.

In operation S112C, the UE may determine whether the UE has left the particular position, based on the values of the plurality of indicators and the plurality of sensing values. In embodiments, the UE may apply a different weight to each of the values of the plurality of indicators and/or the plurality of sensing values, and monitor a change in the position of the UE based on the values of the plurality of indicators and/or the plurality of sensing values to which different weights are applied. In embodiments, the UE may determine that the UE has left the particular position if a third latent vector indicating the feature of data including the values of the plurality of indicators and the plurality of sensing values is greater than a third threshold previously determined to monitor a change in the position of the UE. As another example, the UE may perform computation based on the values of the plurality of indicators, the plurality of sensing values, and a third computation algorithm and determine that the UE has left the particular position if the computation result is greater than the third threshold. However, because this is only an example, the inventive concepts are not limited thereto, and the UE may determine that the UE has left the particular position if the third latent vector or the computation result is less than or equal to the third threshold.

If operation S112C is 'NO', the UE may perform operation S111C again to newly generate (or update) the values of the plurality of indicators and the plurality of sensing values and may perform operation S112C again based on the newly generated (or updated) values of the plurality of indicators and the newly generated (or updated) plurality of sensing values. That is, the UE may monitor a change in the position of the UE based on periodically generated values of the plurality of indicators and a periodically generated plurality of sensing values until confirming that the UE has left the particular position.

If operation S112C is 'YES', in operation S121C, the UE may start a re-connection operation to the first RAT network.

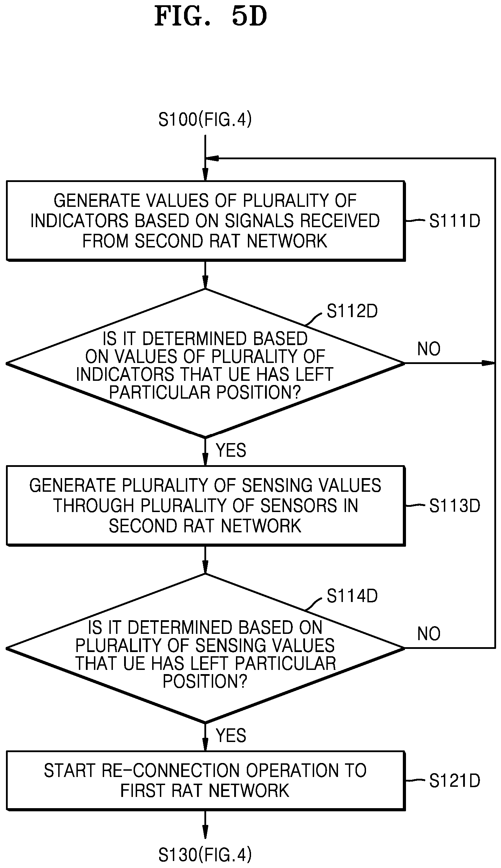

Referring to FIG. 5D, in operation S111D, the UE may generate the values of a plurality of indicators based on signals received from the second RAT network.

In operation S112D, the UE may determine whether the UE has left the particular position, based on the values of the plurality of indicators.

If operation S112D is 'NO', the UE may perform operation S111D again to newly generate the values of the plurality of indicators and may perform operation S112D again based on the newly generated values of the plurality of indicators.

If operation S112D is 'YES', in operation S113D, the UE may generate a plurality of sensing values through the plurality of sensors in the second RAT network.

In operation S114D, the UE may determine whether the UE has left the particular position, based on the plurality of sensing values.

If operation S114D is 'NO', the UE may perform operation S111D again to newly generate the values of the plurality of indicators and may perform operation S112D again based on the newly generated values of the plurality of indicators.

If operation S114D is 'YES', in operation S121D, the UE may start a re-connection operation to the first RAT network.

That is, as shown in FIG. 5D, the UE may determine a change in the position of the UE twice by sequentially using the values of the plurality of indicators and the plurality of sensing values and perform operation S121D only after passing through operations S112D and S114D. By doing this, the UE may more accurately determine whether the UE has left the particular position.

Different neural networks may be utilized in steps S112D and S114D. For instance, the plurality of indicators may be input into a first neural network to determine whether the UE has left the particular position based on the plurality of indicators, and the plurality of sensing values may be input into a second neural network to determine whether the plurality of UE has left the particular position based on the plurality of sensing values. The same, or different, thresholds may be applied to the outputs of the first and second networks when making the respective determinations.

Whist FIG. 5D shows a particular order of steps, this order may be changed. For instance, steps S113D and S114D may be moved to come before steps S111D and S112D. Alternatively, steps S113D and S114D may be implemented in parallel to steps S111D and S112D, and the reconnection may be started if the result of both steps S112D and S114D is 'YES'.

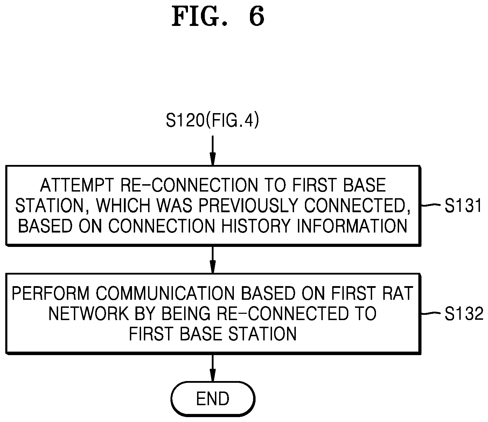

FIG. 6 is a flowchart particularly illustrating operation S130 of FIG. 4.

Referring to FIG. 6, in operation S131, the UE may attempt a re-connection to the first base station, which was previously connected, based on the connection history information. In embodiments, the connection history information may include information required (or otherwise used) for a re-connection to the first base station among pieces of information exchanged in a radio resource control (RRC) signaling operation for a connection between the UE and the first base station. In embodiments, the UE may store the connection history information in a memory (e.g., the memory 130) and read the connection history information from the memory when attempting a re-connection to the first base station.

In operation S132, the UE may perform communication based on the first RAT network by (e.g., based on, after, etc.) being re-connected to the first base station.

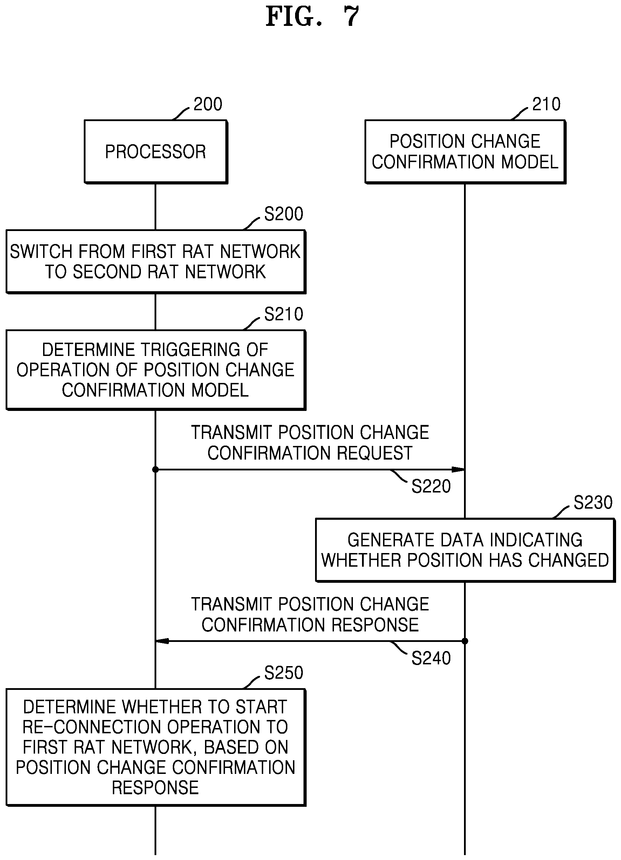

FIG. 7 is a signaling diagram illustrating an operation method between a processor 200 included in a UE and a position change confirmation model 210 executed by the processor 200, according to embodiments. According to embodiments, the processor 200 may be the same as or similar to the processor 110, and the position change confirmation model 210 may the same as or similar to the position change confirmation model 132, discussed in connection with FIGS. 2A-2B. Operations of the processor 200 and the position change confirmation model 210 in FIG. 7 may be understood as an operation of the UE (e.g., the UE 100).

Referring to FIG. 7, in operation S200, the processor 200 may switch a connected network from the first RAT network to the second RAT network according to movement of the UE to a particular position. In embodiments, the processor 200 may recognize that the first RAT network is not available at the particular position, disconnect a connection to the first RAT network, and control a connection to the second RAT network. Thereafter, the processor 200 may perform communication based on the second RAT network. The processor 200 may determine whether to switch based on whether the first RAT network is available. Accordingly, the processor 200 may switch in response to the first RAT network becoming unavailable. The processor 200 may or may not monitor UE movement in step S200. For instance, whilst the first RAT network may become unavailable due to movement of the UE, the processor need not process any sensor data indicating the position/or movement of the UE in step S200. Alternatively, the processor 200 may process sensor data indicating the position and/or movement of the UE in step S200 in order to determine movement of the UE.

In operation S210, the processor 200 may determine triggering of an operation of the position change confirmation model 210. In embodiments, the processor 200 may trigger an operation of the position change confirmation model 210 if the connection to the first RAT network is disconnected due to movement of the UE to the particular position. For example, the operation of the position change confirmation model 210 may include an operation of monitoring a change in the position of the UE from the particular position by using the position change confirmation model 210.

In operation S220, the processor 200 may transmit a position change confirmation request to the position change confirmation model 210. In embodiments, the position change confirmation request may include data generated from the values of a plurality of indicators related to the second RAT network. In embodiments, the position change confirmation request may include data generated from a plurality of sensing values related to movement of the UE. In addition, in embodiments, the position change confirmation request may include data generated from the values of the plurality of indicators and the plurality of sensing values. That is, the processor 200 may generate data by processing at least one of the values of the plurality of indicators and/or the plurality of sensing values to be suitable for the position change confirmation model 210, and input the generated data to the position change confirmation model 210.

In operation S230, the position change confirmation model 210 may generate data indicating whether the position of the UE has changed from the particular position, in response to the received position change confirmation request. In embodiments, the position change confirmation model 210 may receive the input of the data included in the position change confirmation request and output data indicating whether the position of the UE has changed. As a particular example, the position change confirmation model 210 may perform an NN computation for extracting the feature of the input data and output a computation result. The computation result may include a probability value that the UE has left the particular position, and if the probability value is greater than a threshold, it may be determined that the UE has left the particular position.

In operation S240, the position change confirmation model 210 may transmit, to the processor 200, a position change confirmation response including the data indicating whether the position of the UE has changed from the particular position. According to embodiments, the position change confirmation response may include the probability value of the computation result and/or an indication of whether the probability value is greater than the threshold.

In operation S250, the processor 200 may determine whether to start a re-connection operation to the first RAT network, based on the position change confirmation response. As a particular example, the processor 200 may start a re-connection operation to the first RAT network if the data included in the position change confirmation response indicates a position change. According to embodiments, the processor 200 may start the re-connection operation in response to determining that the probability value is greater than the threshold.

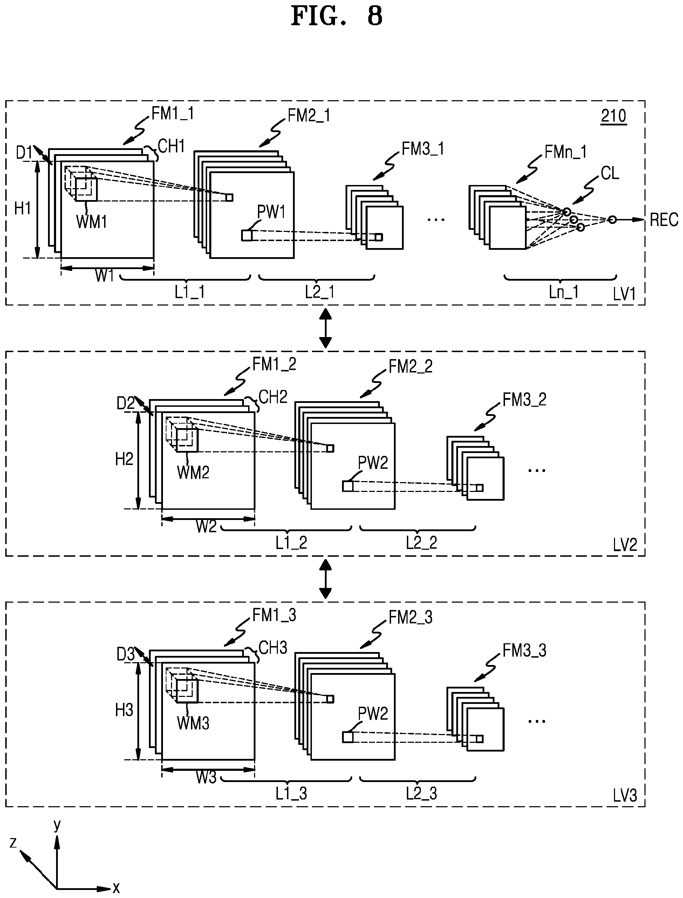

FIG. 8 illustrates an architecture of the position change confirmation model 210 of FIG. 7. The architecture of the position change confirmation model 210 described with reference to FIG. 8 may be applied to the position change confirmation model 132 of FIGS. 2A and 2B.

Referring to FIG. 8, the position change confirmation model 210 may include a plurality of levels, e.g., first to third levels LV1 to LV3. However, the inventive concepts are not necessarily limited thereto, and an NN may be composed of only one level or two or more levels. Hereinafter, the first level LV1 is described, but this may also be applied in substantially the same manner to the other levels included in the position change confirmation model 210. In addition, in accordance with circumstances, some of the layers in the first level LV1 of the position change confirmation model 210 may be omitted or other layers may be added to the layers in the first level LV1.

The first level LV1 may include a plurality of layers, e.g., first to nth layers L1_1 to Ln_1. The position change confirmation model 210 of such a multi-layered architecture may be referred to as a deep neural network (DNN) or a deep learning architecture. Each of the first to nth layers L1_1 to Ln_1 may be a linear layer or a nonlinear layer, and in embodiments, at least one linear layer and at least one nonlinear layer may be combined as one layer. For example, a linear layer may include a convolution layer or a fully connected layer, and a nonlinear layer may include a pooling layer or an activation layer.

For example, the first layer L1_1 may be a convolution layer, the second layer L2_1 may be a pooling layer, and the nth layer may be a fully connected layer as an output layer. The position change confirmation model 210 may further include an activation layer and a layer that performs another type of computation.

Each of the first to nth layers L1_1 to Ln_1 may receive, as an input feature map, input data or a feature map generated in a previous layer and generate an output feature map by computing the input feature map. Herein, a feature map indicates data representing various features of input data. First to nth feature maps FM1_1 to FMn_1 may have, for example, a two-dimensional matrix or three-dimensional matrix (or referred to as tensor) form including a plurality of feature values. Each of the first to nth feature maps FM1_1 to FMn_1 may have a width W1 (or referred to as column), a height H1 (or referred to as row), and a depth D1, which correspond to the x-axis, the y-axis, and the z-axis on a coordinate system, respectively. Herein, the depth D1 may be referred to as the number of channels CH1. Although FIG. 8 shows three channels CH1, the inventive concepts are not necessarily limited thereto, and the number of channels CH1 may be 1 or greater.

The first layer L1_1 may generate the second feature map FM2_1 by convoluting the first feature map FM1_1 with a weight map WM1. The weight map WM1 may have a two-dimensional matrix or three-dimensional matrix form including a plurality of weight values. The weight map WM1 may be referred to as a kernel. The weight map WM1 may perform filtering of the first feature map FM1_1 and be referred to as a filter or a kernel. The channels of the weight map WM1 may be convoluted with the channels of the first feature map FM1_1, respectively. The weight map WM1 is shifted as a sliding window in a manner of crossing the first feature map FM1_1. For each shift, the weights included in the weight map WM1 may be multiplied by all feature values in a region overlapping the first feature map FM1_1, respectively, and then added. According to convolution of the first feature map FM1_1 and the weight map WM1, one channel of the second feature map FM2_1 may be generated. Although FIG. 8 shows one weight map WM1, a plurality of weight maps are substantially convoluted with the first feature map FM1_1 to generate a plurality of channels of the second feature map FM2_1. In other words, the number of channels of the second feature map FM2_1 may correspond to the number of weight maps.

The second layer L2_1 may generate the third feature map FM3_1 by changing the spatial size of the second feature map FM2_1 through pooling. Pooling may be referred to as sampling or down-sampling. A two-dimensional pooling window PW1 may be shifted on the second feature map FM2_1 by a unit of the size of the pooling window PW1, and the maximum (or highest) value (or the mean value) of feature values in a region overlapping the pooling window PW1 may be selected. Accordingly, the third feature map FM3_1 may be generated by changing the spatial size of the second feature map FM2_1. The number of channels of the third feature map FM3_1 may be the same as (or similar to) the number of channels of the second feature map FM2_1.

The nth layer Ln_1 may classify a class CL of input data by combining the features of the nth feature map FMn_1. In addition, a recognition signal REC corresponding to the class CL may be generated. The nth layer Ln_1 may be omitted in accordance with certain circumstances.

The position change confirmation model 210 may include one or more (e.g., a plurality of) levels. Each of the plurality of levels may receive, as an input feature map, a feature map generated from data input to the level and compute the input feature map to generate an output feature map or the recognition signal REC. In embodiments, the first level LV1 may receive, as an input feature map, a feature map generated from input data. The first layer L1_1 of the first level LV1 may receive the first feature map FM1_1 generated from the input data. The second level LV2 may receive, as an input feature map, a feature map generated from first reconstructed data. A first layer L1_2 of the second level LV2 may receive a first feature map FM1_2 generated from the first reconstructed data. The third level LV3 may receive, as an input feature map, a feature map generated from second reconstructed data. A first layer L1_3 of the third level LV3 may receive a first feature map FM1_3 generated from the second reconstructed data. The unit of the first reconstructed data may differ from the unit of the second reconstructed data. Widths W1, W2, and W3, heights H1, H2, and H3, and depths D1, D2, and D3 of the first feature map FM1_1, the first feature map FM1_2, and the first feature map FM1_3 may differ from each other.

The plurality of levels may be organically connected to each other. In embodiments, feature maps output from layers included in each of the plurality of levels may be organically connected to feature maps of a different level. For example, the position change confirmation model 210 may perform computation to extract the features of the third feature map FM3_1 and the first feature map FM1_2 and generate a new feature map. In embodiments, the nth layer Ln_1 may exist only in one level and classify the class CL of input data by combining the features of the feature maps of the plurality of levels.

In embodiments, a configuration including layers of the position change confirmation model 210, the number of feature maps, and a combination of feature maps may be determined to effectively determine a change in the position of a user from the particular position.

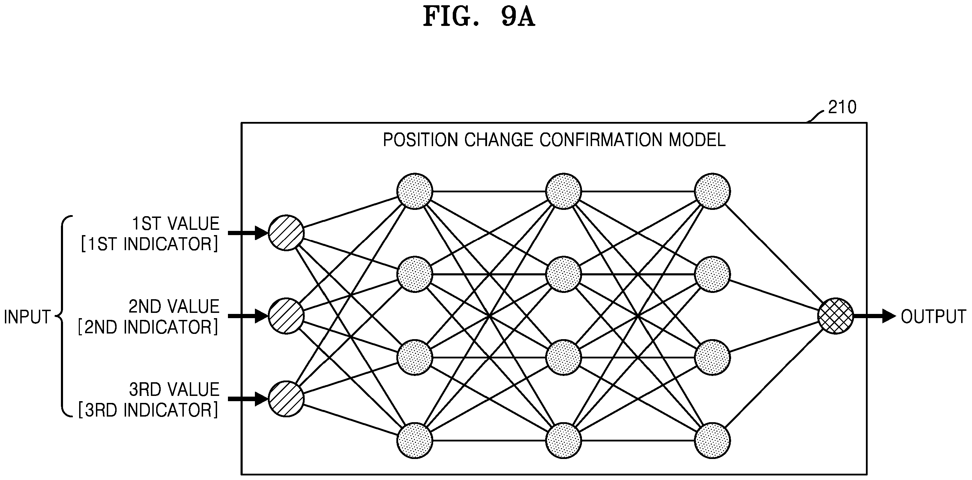

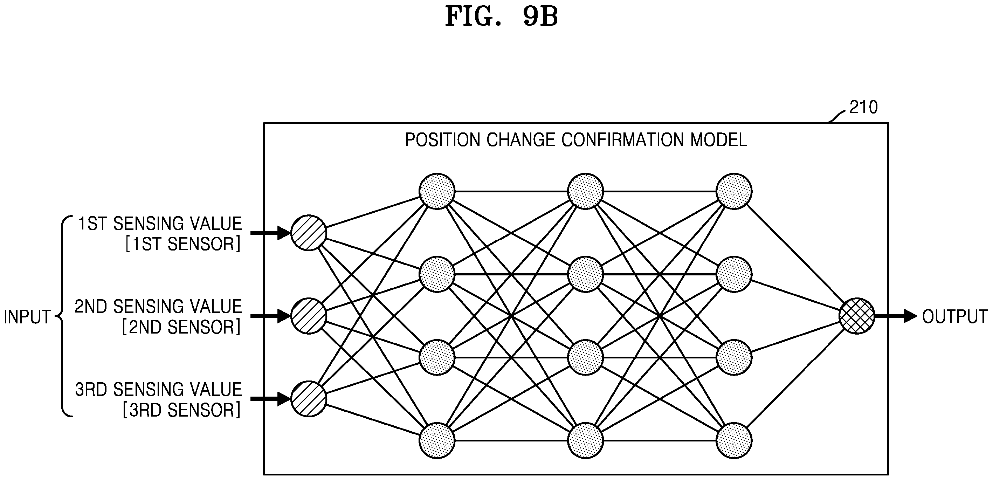

FIGS. 9A and 9B illustrate a monitoring operation using the position change confirmation model 210, according to embodiments. The monitoring operation using the position change confirmation model 210, which is described with reference to FIGS. 9A and 9B, may be applied to the position change confirmation model 132 of FIGS. 2A and 2B. In addition, although FIGS. 9A and 9B show that three values are input to the position change confirmation model 210, because this is only an example, the inventive concepts are not limited thereto, and a greater or smaller number of values may be input. In addition, although FIGS. 9A and 9B show that one value is output from the position change confirmation model 210, because this is only an example, the inventive concepts are not limited thereto.

Referring to FIG. 9A, data including a first value of a first indicator, a second value of a second indicator, and a third value of a third indicator may be input to the position change confirmation model 210. The position change confirmation model 210 may perform NN-based computation based on an input and output data indicating whether the position of a UE has changed from a particular position. For example, an output of the position change confirmation model 210 may include a probability value of a change in the position of the UE. In embodiments, the first to third indicators are associated with the secondary RAT network and may be indicators suitable to monitor a change in the position of the UE. As a particular example, the first to third indicators may indicate the reception intensities of signals based on the secondary RAT network.

Referring to FIG. 9B, data including a first sensing value of a first sensor, a second sensing value of a second sensor, and a third sensing value of a third sensor may be input to the position change confirmation model 210. The position change confirmation model 210 may perform NN-based computation based on an input and output data indicating whether the position of a UE has changed from a particular position. In embodiments, the first to third sensors may perform a sensing operation related to movement of the UE.

Unlike FIGS. 9A and 9B, data including the values of indicators and sensing values (e.g., data including both the values of indicators and sensing values) may be input to the position change confirmation model 210.

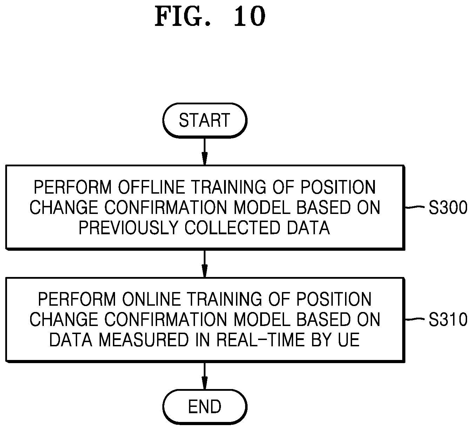

FIG. 10 is a flowchart illustrating a method of training a position change confirmation model, according to embodiments.

Referring to FIG. 10, in operation S300, offline training may be performed for the position change confirmation model based on previously collected data. In embodiments, the position change confirmation model may be offline-trained based on data previously collected in various environments and stored in a memory of a UE in a UE mass-production stage.

In operation S310, online training may be performed for the position change confirmation model based on data measured in real-time by the UE. In embodiments, the position change confirmation model may be continuously updated by being online-trained based on data measured in real-time by providing a communication service to a user since the UE was sold to the user (e.g., based on data measured by the UE during the lifecycle, or since original activation, of the UE).

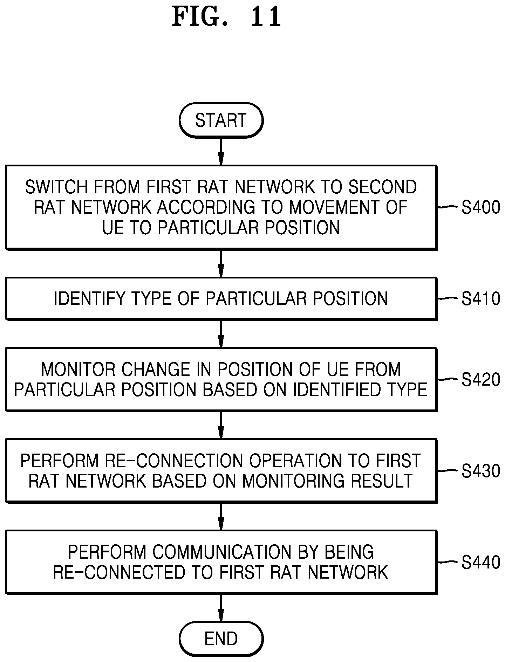

FIG. 11 is a flowchart illustrating a method of operating a UE, according to embodiments.

Referring to FIG. 11, in operation S400, a connected network may switch from the first RAT network to the second RAT network according to movement of the UE to a particular position.

In operation S410, the UE may identify the type of the particular position. In embodiments, there may exist various types of particular positions where the first RAT network is not available, and values required (or otherwise used) to monitor a change in the position of the UE may be preset (or alternatively, given) according to the types of the particular positions.

In operation S420, the UE may monitor a change in the position of the UE from the particular position based on the identified type. In embodiments, the UE may selectively generate the values of indicators matched to the identified type from among a plurality of indicators associated with the second RAT network and use the generated values of the indicators for the monitoring. In embodiments, the UE may generate sensing values by selectively using sensors matched to the identified type from among a plurality of sensors configured to perform a sensing operation related to movement of the UE and use the generated sensing values for the monitoring. In embodiments, the UE may use, for the monitoring, indicators and sensors matched to the identified type among the plurality of indicators and the plurality of sensors.

In operation S430, the UE may perform a re-connection operation to the first RAT network based on the monitoring result of operation S420.

In operation S440, the UE may perform communication by (e.g., based on, after, etc.) being re-connected to the first RAT network.

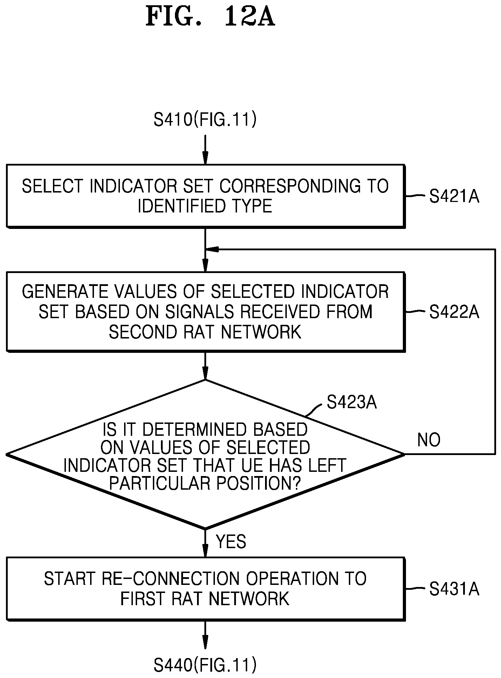

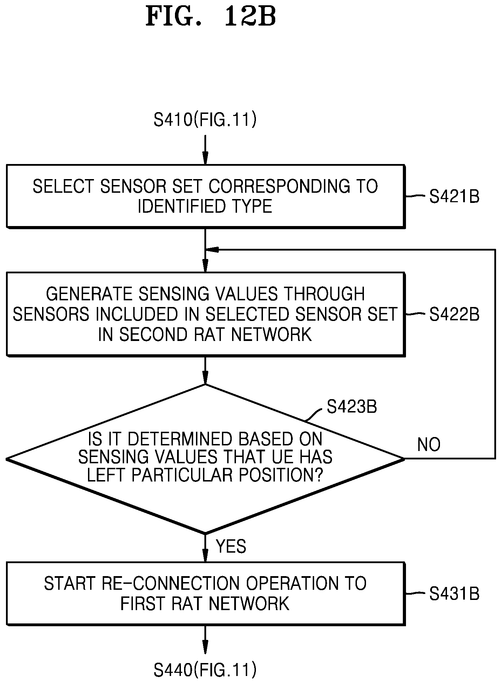

FIGS. 12A and 12B are flowcharts particularly illustrating operations S420 and S430 of FIG. 11.

Referring to FIG. 12A, in operation S421A, the UE may select an indicator set corresponding to the identified type. In the specification, the indicator set may be a unit including indicators preset (or alternatively, given) to be used for monitoring of a change in the position of the UE according to the type of the particular position. For example, a first indicator set may correspond to a first particular position of a first type, and a second indicator set may correspond to a second particular position of a second type.

In operation S422A, the UE may generate the values of the selected indicator set based on signals received from the second RAT network. As a particular example, the UE may generate the values of the indicators of the selected indicator set based on RF signals received from a second base station in a period in which the UE is temporarily connected to the second base station and performs communication based on the second RAT network.

In operation S423A, the UE may determine whether the UE has left the particular position, based on the values of the selected indicator set.

If operation S423A is 'NO', the UE may perform operation S422A again to newly generate (or update) the values of the selected indicator set and may perform operation S423A again based on the newly generated (or updated) values.

If operation S423A is 'YES', in operation S431A, the UE may start a re-connection operation to the first RAT network.

Referring to FIG. 12B, in operation S421B, the UE may select a sensor set corresponding to the identified type. In the specification, the sensor set may be a unit including sensors preset (or alternatively, given) to be used for monitoring of a change in the position of the UE according to the type of the particular position. For example, a first sensor set may correspond to the first particular position of the first type, and a second sensor set may correspond to the second particular position of the second type.

In operation S422B, the UE may generate, in the second RAT network, sensing values through sensors included in the selected sensor set. As a particular example, the UE may generate the sensing values of the sensors included in the selected sensor set, in a period in which the UE is temporarily connected to the second base station and performs communication based on the second RAT network.

In operation S423B, the UE may determine whether the UE has left the particular position, based on the sensing values.

If operation S423B is 'NO', the UE may perform operation S422B again to newly generate (or update) sensing values by using the sensors included in the selected sensor set and may perform operation S423B again based on the newly generated (or updated) values.

If operation S423B is 'YES', in operation S431B, the UE may start a re-connection operation to the first RAT network.

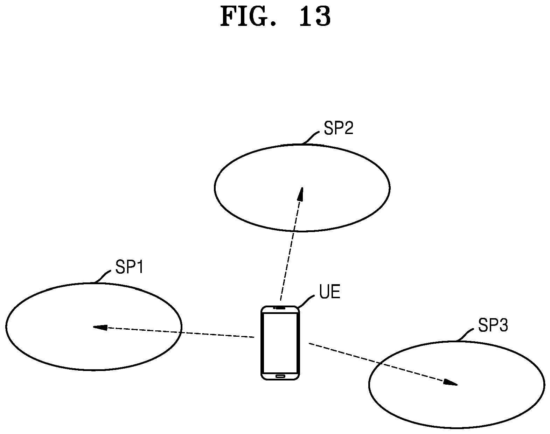

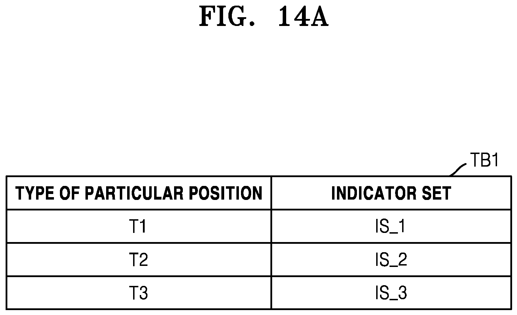

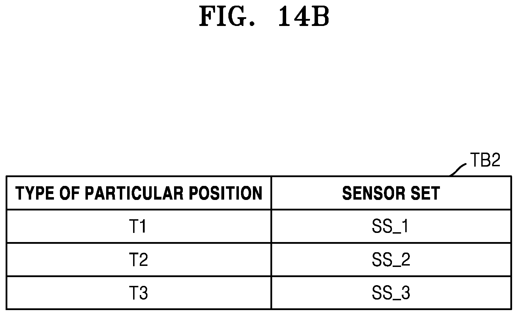

FIG. 13 illustrates a method of operating a UE, according to embodiments, and FIGS. 14A and 14B are tables referred to describe the method, of FIG. 13, of operating the UE.

Referring to FIG. 13, if the UE moves to any one of first to third particular positions SP1, SP2, and/or SP3 while performing communication by being connected to the first RAT network, the first RAT network may be not available such that the connection to the first RAT network is disconnected. In addition, in embodiments, the first particular position SP1 may correspond to the first type, the second particular position SP2 may correspond to the second type, and the third particular position SP3 may correspond to a third type. As described above, values required (or otherwise used) to monitor a change in the position of the UE may vary for each of the types of particular positions.

In embodiments, when the UE is temporarily connected to the second RAT network because the first RAT network is not available due to movement of the UE to a particular position, the UE may identify the type of the particular position and previously select values required (or otherwise used) for monitoring.

Referring to FIGS. 13 and 14A, in a first table TB1, a first indicator set IS_1 may correspond to a first type T1 of the first particular position SP1, a second indicator set IS_2 may correspond to a second type T2 of the second particular position SP2, and a third indicator set IS_3 may correspond to a third type T3 of the third particular position SP3.

For example, when the UE moves to the first particular position SP1, the UE may identify that the first particular position SP1 is the first type T1, generate the values of indicators included in the first indicator set IS_1, and use the generated values to monitor a change in the position of the UE.

For example, when the UE moves to the second particular position SP2, the UE may identify that the second particular position SP2 is the second type T2, generate the values of indicators included in the second indicator set IS_2, and use the generated values to monitor a change in the position of the UE.

In addition, for example, when the UE moves to the third particular position SP3, the UE may identify that the third particular position SP3 is the third type T3, generate the values of indicators included in the third indicator set IS_3, and use the generated values to monitor a change in the position of the UE.

Referring to FIGS. 13 and 14B, in a second table TB2, a first sensor set SS_1 may correspond to the first type T1 of the first particular position SP1, a second sensor set SS_2 may correspond to the second type T2 of the second particular position SP2, and a third sensor set IS_3 may correspond to the third type T3 of the third particular position SP3.

For example, when the UE moves to the first particular position SP1, the UE may identify that the first particular position SP1 is the first type T1, generate sensing values by using sensors included in the first sensor set SS_1, and use the generated values to monitor a change in the position of the UE.

For example, when the UE moves to the second particular position SP2, the UE may identify that the second particular position SP2 is the second type T2, generate sensing values by using sensors included in the second sensor set SS_2, and use the generated values to monitor a change in the position of the UE.

In addition, for example, when the UE moves to the third particular position SP3, the UE may identify that the third particular position SP3 is the third type T3, generate sensing values by using sensors included in the third sensor set SS_3, and use the generated values to monitor a change in the position of the UE.

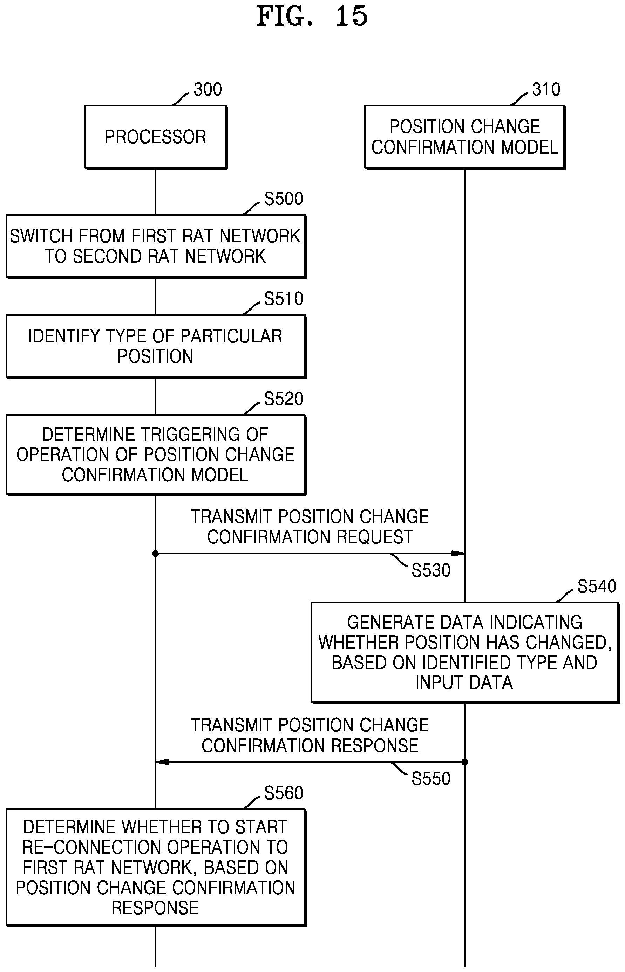

FIG. 15 is a signaling diagram illustrating an operation method between a processor 300 included in a UE and a position change confirmation model 310 executed by the processor 300, according to embodiments. According to embodiments, the processor 300 may be the same as or similar to the processor 110, and the position change confirmation model 310 may the same as or similar to the position change confirmation model 132, discussed in connection with FIGS. 2A-2B. According to embodiments, the processor 300 may be the same as or similar to the processor 200, and the position change confirmation model 310 may the same as or similar to the position change confirmation model 210, discussed in connection with FIG. 7. Operations of the processor 300 and the position change confirmation model 310 in FIG. 15 may be understood as an operation of the UE (e.g., the UE 100).

Referring to FIG. 15, in operation S500, the processor 300 may switch a connected network from the first RAT network to the second RAT network according to movement of the UE to a particular position.

In operation S510, the UE may identify the type of the particular position.

In operation S520, the processor 300 may determine triggering of an operation of the position change confirmation model 310.

In operation S530, the processor 300 may transmit a position change confirmation request to the position change confirmation model 310. In embodiments, the position change confirmation request may include data generated from the values of indicators matched to the identified type among a plurality of indicators related to the second RAT network. In embodiments, the position change confirmation request may include data generated from sensing values matched to the identified type among a plurality of sensing values related to movement of the UE. In addition, in embodiments, the position change confirmation request may include data generated from values matched to the identified type among the values of the plurality of indicators and the plurality of sensing values. The position change confirmation request may further include data indicating the identified type.

In operation S540, the position change confirmation model 310 may generate data indicating whether the position of the UE has changed, based on the type identified from the particular position and input data, in response to the received position change confirmation request.

In operation S550, the position change confirmation model 310 may transmit, to the processor 300, a position change confirmation response including the data indicating whether the position of the UE has changed from the particular position.

In operation S560, the processor 300 may determine whether to start a re-connection operation to the first RAT network, based on the position change confirmation response.

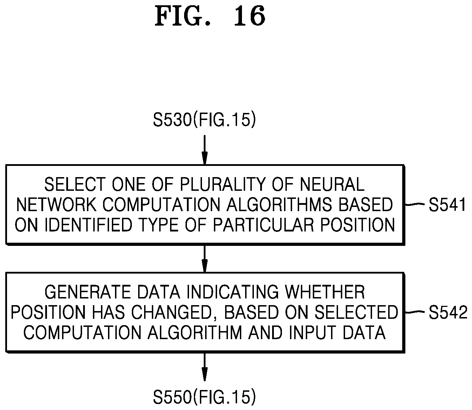

FIG. 16 is a flowchart particularly illustrating operation S540 of FIG. 15.

Referring to FIG. 16, in operation S541, the position change confirmation model 310 may select one of a plurality of NN computation algorithms based on the identified type of the particular position.

In operation S542, the position change confirmation model 310 may generate data indicating whether the position of the UE has changed from the particular position, based on the selected NN computation algorithm and the input data.

In embodiments, the position change confirmation model 310 may recognize, based on the identified type, which values are included in the input data, and select NN computation suitable for the values. The position change confirmation model 310 may perform the NN computation selected for the input data and output a computation result. The computation result may include a probability value that the UE has left the particular position.

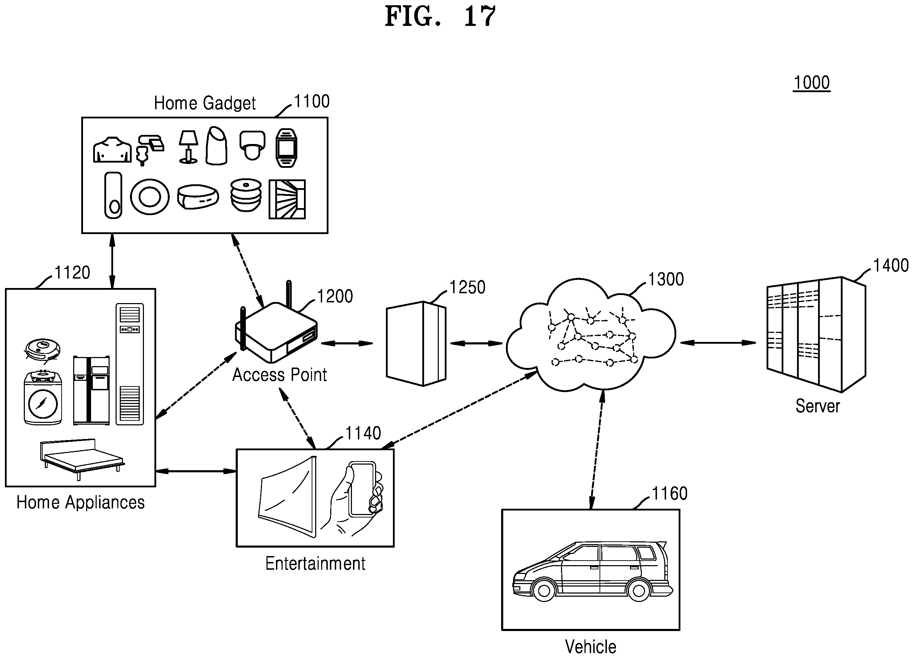

FIG. 17 is a conceptual diagram illustrating an Internet of Things (IoT) network system 1000, according to embodiments.

Referring to FIG. 17, the IoT network system 1000 may include a plurality of IoT devices 1100, 1120, 1140, and 1160, an AP 1200, a gateway 1250, a radio network 1300, and/or a server 1400. IoT may indicate a network among things using wired/wireless communication.

The plurality of IoT devices 1100, 1120, 1140, and 1160 may be grouped according to the characteristics thereof. For example, the plurality of IoT devices 1100, 1120, 1140, and 1160 may be grouped to a home gadget group 1100, a home appliance/furniture group 1120, an entertainment group 1140, and/or a vehicle group 1160. The IoT devices 1100, 1120, and 1140 may be connected to a communication network or another IoT device through the AP 1200. The AP 1200 may be embedded in one IoT device. The gateway 1250 may change a protocol to connect the AP 1200 to an external radio network. The IoT devices 1100, 1120, and 1140 may be connected to an external communication network through the gateway 1250. The radio network 1300 may include the Internet and/or a public network. The plurality of IoT devices 1100, 1120, 1140, and 1160 may be connected, through the radio network 1300, to the server 1400 that provides a certain service, and a user may use the certain service through at least one of the plurality of IoT devices 1100, 1120, 1140, and 1160.

According to embodiments, each of the plurality of IoT devices 1100, 1120, 1140, and 1160 may monitor a change in the position of the IoT device from a particular position and perform a re-connection operation to the primary RAT network based on the monitoring result, if a connected network switches from the primary RAT network to the secondary RAT network due to movement of the IoT device to the particular position.

Conventional devices and methods for managing connections to multiple RAT networks repeatedly attempt to reconnect to a higher priority RAT network in scenarios in which a switch to a lower priority RAT network has been performed (e.g., based on insufficient signal strength/quality of the higher priority RAT network). In so doing, the conventional devices and methods continuously measure a radio signal corresponding to the higher priority RAT network. These continuous measurements and repeated reconnection attempts result in excessive power consumption.

However, according to embodiments, improved devices and methods are provide for managing connections to multiple RAT networks. For example, the improved devices and methods may monitor a UE's position in scenarios in which the UE has switched to a lower priority RAT network. The improved devices and methods may only attempt reconnection to the higher priority RAT network in response to determining that the UE has moved to a different position. Since the lack of access to the higher priority RAT network is likely due to position-specific characteristics (e.g., channel quality), only attempting reconnection in response to determining that the UE has moved to a different position may reduce the number of measurements of the radio signal of the higher priority RAT network and/or reduce the number of reconnection attempts. Also, the monitoring of the UE's position may consume less power than the continuous measurements and repeated reconnection attempts. Accordingly, the improved devices and methods may overcome the deficiencies of the conventional devices and methods to at least reduce power consumption.

According to embodiments, operations described herein as being performed by the wireless communication system 1, the first base station 10, the second base station 20, the UE 30, the re-connection control circuit 32, the processor 110, the transceiver 120, the re-connection control circuit 112, the application processor 140, the plurality of sensors 150, the processor 200, the processor 300, the IoT network system 1000, each among the plurality of IoT devices 1100, 1120, 1140, and/or 1160, the AP 1200, the gateway 1250 and/or the server 1400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm, and/or functions, described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 130). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

In embodiments, the processing circuitry may perform some operations (e.g., the operations described herein as being performed by the position change confirmation model 132, the position change confirmation model 210 and/or the position change confirmation model 310) by artificial intelligence and/or machine learning. As an example, the processing circuitry may implement an artificial neural network (e.g., the position change confirmation model 132, the position change confirmation model 210 and/or the position change confirmation model 310) that is trained on a set of training data by, for example, a supervised, unsupervised, and/or reinforcement learning model, and wherein the processing circuitry may process a feature vector to provide output based upon the training. Such artificial neural networks may utilize a variety of artificial neural network organizational and processing models, such as convolutional neural networks (CNN), recurrent neural networks (RNN) optionally including long short-term memory (LSTM) units and/or gated recurrent units (GRU), stacking-based deep neural networks (S-DNN), state-space dynamic neural networks (S-SDNN), deconvolution networks, deep belief networks (DBN), and/or restricted Boltzmann machines (RBM). Alternatively or additionally, the processing circuitry may include other forms of artificial intelligence and/or machine learning, such as, for example, linear and/or logistic regression, statistical clustering, Bayesian classification, decision trees, dimensionality reduction such as principal component analysis, and expert systems; and/or combinations thereof, including ensembles such as random forests.

Herein, the position change confirmation model (e.g., the position change confirmation model 132, the position change confirmation model 210 and/or the position change confirmation model 310) may have any structure that is trainable, e.g., with training data. For example, the position change confirmation model (e.g., the position change confirmation model 132, the position change confirmation model 210 and/or the position change confirmation model 310) may include an artificial neural network, a decision tree, a support vector machine, a Bayesian network, a genetic algorithm, and/or the like. The position change confirmation model (e.g., the position change confirmation model 132, the position change confirmation model 210 and/or the position change confirmation model 310) is described herein by mainly referring to an artificial neural network, but embodiments are not limited thereto. Non-limiting examples of the artificial neural network may include a convolution neural network (CNN), a region based convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, a classification network, and/or the like.

While the inventive concepts have been particularly shown and described with reference to embodiments thereof, it will be understood that various changes in form and details may be made therein without departing from the scope of the following claims.

**Claims**

1. A user equipment, UE, supporting a first radio access technology, RAT, network and a second RAT network, the UE comprising:
   processing circuitry configured to

   monitor whether a position of the UE has changed from a first position to obtain a monitoring result, a network connected to the UE switching from the first RAT network to the second RAT network based on the UE moving to the first position, and
   perform a re-connection operation to the first RAT network based on the monitoring result.

2. The UE of claim 1, wherein

   the first RAT network is a primary RAT network; and
   the second RAT network is a secondary RAT network.

3. The UE of claim 2, wherein

   the first RAT network is a 5th generation network; and
   the second RAT network is a long term evolution network.

4. The UE of any preceding claim, wherein the first position is a position that causes switching from the first RAT network to the second RAT network.

5. The UE of any preceding claim, wherein the processing circuitry is configured to monitor whether the position of the UE has changed from the first position including determining whether the UE has left the first position based on values of a plurality of indicators, the values of the plurality of indicators being generated using radio frequency, RF, signals received based on the second RAT network.

6. The UE of claim 5, wherein the plurality of indicators comprise at least one of a global cell identifier, a physical cell identifier, a frequency band, a bandwidth, received signal received power, reference signal received quality, a received signal strength indicator, a signal to interference plus noise ratio, a number of resource blocks, a channel quality indicator, a rank indicator, a precoding matrix indicator, a modulation and coding scheme, a modulation order, a block error rate, transmission power, a Doppler frequency, or a delay spread.

7. The UE of claim 5 or claim 6, further comprising:

   a plurality of sensors configured to generate a plurality of sensing values by performing a sensing operation related to movement of the UE,
   wherein the processing circuitry is configured to monitor whether the position of the UE has changed from the first position including determining whether the UE has left the first position based on the plurality of sensing values.

8. The UE of claim 7, wherein the plurality of sensors comprise at least one of a gyroscopic sensor, an acceleration sensor, a linear acceleration sensor, or a geomagnetic sensor.

9. The UE of any of claims 5-8, wherein the processing circuitry is configured to perform the re-connection operation including starting the re-connection operation to the first RAT network in response to determining that the UE has left the first position.

10. The UE of any preceding claim, further comprising:

    a memory storing a position change confirmation model, the position change confirmation model being based on a neural network,
    wherein the processing circuitry is configured to monitor whether the position of the UE has changed from the first position including:

       providing, to the position change confirmation model executed by the processing circuitry, an input including

          first data periodically generated in a period in which communication based on the second RAT network is performed, or
          second data generated by filtering the first data, and

       determining, based on an output of the position change confirmation model, whether the UE has left the first position.

11. The UE of any preceding claim, wherein processing circuitry is configured to perform the re-connection operation including attempting a re-connection to a base station that provides the first RAT network based on connection history information.

12. The UE of any preceding claim, wherein the processing circuitry is configured to monitor whether the position of the UE has changed from the first position including determining whether the UE has left the first position based on values of an indicator set corresponding to a type of the first position, the values of the indicator set being generated using radio frequency signals received based on the second RAT network.

13. The UE of any preceding claim, further comprising:

    a plurality of sensors configured to perform a sensing operation related to movement of the UE,
    wherein the processing circuitry is configured to monitor whether the position of the UE has changed from the first position including determining whether the UE has left the first position based on a sensing value generated using at least one sensor, the at least one sensor being included among a sensor set corresponding to a type of the first position, and the at least one sensor being among the plurality of sensors.

14. An operation method of a user equipment, UE, supporting a first radio access technology, RAT, network and a second RAT network, the method comprising:

    switching from the first RAT network to the second RAT network based on the UE moving to a first position, the switching including switching communication from a first base station to a second base station, the first base station being based on the first RAT network, and the second base station being based on the second RAT network;

monitoring whether a position of the UE has changed to obtain a monitoring result; and

performing a re-connection operation to the first RAT network based on the monitoring result.

15. The method of claim 14, wherein the monitoring whether the position of the UE has changed comprises determining whether the UE has left the first position based on at least one of:

movement of the UE, or

signals received from the second base station.

# FIG. 1

SWITCH

RE-CONNECTION

USER EQUIPMENT

RE-CONNECTION
CONTROL CIRCUIT

# FIG. 2A

USER EQUIPMENT 100

PROCESSOR 110

RE-CONNECTION CONTROL CIRCUIT 112

TRANSCEIVER 120

121_1

121_x

MEMORY 130

POSITION CHANGE CONFIRMATION MODEL 132

# FIG. 2B

USER EQUIPMENT 100

SENSORS 150

APPLICATION PROCESSOR 140

PROCESSOR 110
RE-CONNECTION CONTROL CIRCUIT 112

TRANSCEIVER 120

121_1

121_x

MEMORY 130
POSITION CHANGE CONFIRMATION MODEL 132

EP 4 550 893 A1

# FIG. 3

# FIG. 4

START

↓

SWITCH FROM FIRST RAT NETWORK TO SECOND RAT NETWORK ACCORDING TO MOVEMENT OF UE TO PARTICULAR POSITION ⎯ S100

↓

MONITOR CHANGE IN POSITION OF UE FROM PARTICULAR POSITION ⎯ S110

↓

PERFORM RE-CONNECTION OPERATION TO FIRST RAT NETWORK BASED ON MONITORING RESULT ⎯ S120

↓

PERFORM COMMUNICATION BY BEING RE-CONNECTED TO FIRST RAT NETWORK ⎯ S130

↓

END

# FIG. 5A

S100(FIG.4)

GENERATE VALUES OF PLURALITY OF
INDICATORS BASED ON SIGNALS RECEIVED
FROM SECOND RAT NETWORK — S111A

IS IT DETERMINED BASED
ON VALUES OF PLURALITY OF
INDICATORS THAT UE HAS LEFT
PARTICULAR POSITION? — S112A

NO

YES

START RE-CONNECTION OPERATION
TO FIRST RAT NETWORK — S121A

S130(FIG.4)

# FIG. 5B

S100(FIG.4)

GENERATE PLURALITY OF SENSING VALUES THROUGH PLURALITY OF SENSORS IN SECOND RAT NETWORK — S111B

S112B

IS IT DETERMINED BASED ON PLURALITY OF SENSING VALUES THAT UE HAS LEFT PARTICULAR POSITION?

NO

YES

START RE-CONNECTION OPERATION TO FIRST RAT NETWORK — S121B

S130(FIG.4)

# FIG. 5C

S100(FIG.4)

GENERATE VALUES OF PLURALITY OF
INDICATORS BASED ON SIGNALS RECEIVED
FROM SECOND RAT NETWORK AND GENERATE — S111C
PLURALITY OF SENSING VALUES THROUGH
PLURALITY OF SENSORS

S112C

IS IT DETERMINED BASED
ON VALUES OF PLURALITY OF
INDICATORS AND PLURALITY OF          NO
SENSING VALUES THAT UE HAS
LEFT PARTICULAR
POSITION?

YES

START RE-CONNECTION OPERATION TO — S121C
FIRST RAT NETWORK

S130(FIG.4)

# FIG. 5D

S100(FIG.4)

GENERATE VALUES OF PLURALITY OF
INDICATORS BASED ON SIGNALS RECEIVED
FROM SECOND RAT NETWORK —— S111D

S112D
IS IT DETERMINED BASED
ON VALUES OF PLURALITY OF
INDICATORS THAT UE HAS LEFT
PARTICULAR POSITION? —— NO

YES

GENERATE PLURALITY OF SENSING VALUES
THROUGH PLURALITY OF SENSORS IN
SECOND RAT NETWORK —— S113D

S114D
IS IT DETERMINED BASED ON
PLURALITY OF SENSING VALUES
THAT UE HAS LEFT PARTICULAR
POSITION? —— NO

YES

START RE-CONNECTION OPERATION TO
FIRST RAT NETWORK —— S121D

S130(FIG.4)

# FIG. 6

S120(FIG.4)

ATTEMPT RE-CONNECTION TO FIRST BASE STATION, WHICH WAS PREVIOUSLY CONNECTED, BASED ON CONNECTION HISTORY INFORMATION ── S131

PERFORM COMMUNICATION BASED ON FIRST RAT NETWORK BY BEING RE-CONNECTED TO FIRST BASE STATION ── S132

END

# FIG. 7

200

PROCESSOR

210

POSITION CHANGE
CONFIRMATION MODEL

S200

SWITCH FROM FIRST RAT NETWORK
TO SECOND RAT NETWORK

S210

DETERMINE TRIGGERING OF
OPERATION OF POSITION CHANGE
CONFIRMATION MODEL

TRANSMIT POSITION CHANGE
CONFIRMATION REQUEST

S220

S230

GENERATE DATA INDICATING
WHETHER POSITION HAS CHANGED

TRANSMIT POSITION CHANGE
CONFIRMATION RESPONSE

S240

S250

DETERMINE WHETHER TO START
RE-CONNECTION OPERATION TO
FIRST RAT NETWORK, BASED ON
POSITION CHANGE CONFIRMATION
RESPONSE

# FIG. 8

# FIG. 9A

POSITION CHANGE CONFIRMATION MODEL — 210

INPUT {
1ST VALUE [1ST INDICATOR]
2ND VALUE [2ND INDICATOR]
3RD VALUE [3RD INDICATOR]
}

OUTPUT

EP 4 550 893 A1

# FIG. 9B

POSITION CHANGE CONFIRMATION MODEL 210

INPUT {
1ST SENSING VALUE [1ST SENSOR]
2ND SENSING VALUE [2ND SENSOR]
3RD SENSING VALUE [3RD SENSOR]
}

OUTPUT

# FIG. 10

```
        ┌─────────┐
        │  START  │
        └─────────┘
             │
             ▼
┌──────────────────────────────────┐
│  PERFORM OFFLINE TRAINING OF      │
│  POSITION CHANGE CONFIRMATION     │─── S300
│  MODEL BASED ON PREVIOUSLY        │
│  COLLECTED DATA                   │
└──────────────────────────────────┘
             │
             ▼
┌──────────────────────────────────┐
│  PERFORM ONLINE TRAINING OF       │
│  POSITION CHANGE CONFIRMATION     │─── S310
│  MODEL BASED ON DATA MEASURED     │
│  IN REAL-TIME BY UE               │
└──────────────────────────────────┘
             │
             ▼
        ┌─────────┐
        │   END   │
        └─────────┘
```

# FIG. 11

START

SWITCH FROM FIRST RAT NETWORK TO SECOND RAT NETWORK ACCORDING TO MOVEMENT OF UE TO PARTICULAR POSITION — S400

IDENTIFY TYPE OF PARTICULAR POSITION — S410

MONITOR CHANGE IN POSITION OF UE FROM PARTICULAR POSITION BASED ON IDENTIFIED TYPE — S420

PERFORM RE-CONNECTION OPERATION TO FIRST RAT NETWORK BASED ON MONITORING RESULT — S430

PERFORM COMMUNICATION BY BEING RE-CONNECTED TO FIRST RAT NETWORK — S440

END

# FIG. 12A

S410(FIG.11)

SELECT INDICATOR SET CORRESPONDING TO
IDENTIFIED TYPE — S421A

GENERATE VALUES OF SELECTED INDICATOR
SET BASED ON SIGNALS RECEIVED FROM
SECOND RAT NETWORK — S422A

S423A

IS IT DETERMINED BASED
ON VALUES OF SELECTED
INDICATOR SET THAT UE HAS LEFT
PARTICULAR POSITION?

NO

YES

START RE-CONNECTION OPERATION TO
FIRST RAT NETWORK — S431A

S440(FIG.11)

# FIG. 12B

S410(FIG.11)

SELECT SENSOR SET CORRESPONDING TO
IDENTIFIED TYPE — S421B

GENERATE SENSING VALUES THROUGH
SENSORS INCLUDED IN SELECTED SENSOR SET — S422B
IN SECOND RAT NETWORK

S423B

IS IT DETERMINED BASED ON
SENSING VALUES THAT UE HAS          NO
LEFT PARTICULAR POSITION?

YES

START RE-CONNECTION OPERATION TO
FIRST RAT NETWORK — S431B

S440(FIG.11)

# FIG. 13

# FIG. 14A

TB1

| TYPE OF PARTICULAR POSITION | INDICATOR SET |
|---|---|
| T1 | IS_1 |
| T2 | IS_2 |
| T3 | IS_3 |

# FIG. 14B

TB2

| TYPE OF PARTICULAR POSITION | SENSOR SET |
|---|---|
| T1 | SS_1 |
| T2 | SS_2 |
| T3 | SS_3 |

# FIG. 15

300

PROCESSOR

310

POSITION CHANGE
CONFIRMATION MODEL

S500

SWITCH FROM FIRST RAT NETWORK
TO SECOND RAT NETWORK

S510

IDENTIFY TYPE OF PARTICULAR
POSITION

S520

DETERMINE TRIGGERING OF
OPERATION OF POSITION CHANGE
CONFIRMATION MODEL

TRANSMIT POSITION CHANGE
CONFIRMATION REQUEST

S530

S540

GENERATE DATA INDICATING
WHETHER POSITION HAS CHANGED,
BASED ON IDENTIFIED TYPE AND
INPUT DATA

TRANSMIT POSITION CHANGE
CONFIRMATION RESPONSE

S550

S560

DETERMINE WHETHER TO START
RE-CONNECTION OPERATION TO
FIRST RAT NETWORK, BASED ON
POSITION CHANGE CONFIRMATION
RESPONSE

# FIG. 16

S530(FIG.15)

SELECT ONE OF PLURALITY OF NEURAL
NETWORK COMPUTATION ALGORITHMS BASED — S541
ON IDENTIFIED TYPE OF PARTICULAR POSITION

GENERATE DATA INDICATING WHETHER
POSITION HAS CHANGED, BASED ON SELECTED — S542
COMPUTATION ALGORITHM AND INPUT DATA

S550(FIG.15)

## FIG. 17

Home Gadget 1100

1000

1120

1200

1250

1300

1400

Home Appliances

Access Point

Entertainment 1140

Vehicle 1160

Server

EP 4 550 893 A1

Europäisches
Patentamt

European
Patent Office

Office européen
des brevets

# EUROPEAN SEARCH REPORT

Application Number

EP 24 20 8400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/097590 A1 (QUALCOMM INC [US]; DAI JING [CN] ET AL.) 8 June 2023 (2023-06-08) * paragraph [0059] - paragraph [0067]; figure 5 * | 1-15 | INV. H04W48/18 |
| X | US 2020/383028 A1 (LIN CHIU-JEN [TW] ET AL) 3 December 2020 (2020-12-03) * paragraph [0003] - paragraph [0004] * * paragraph [0047] - paragraph [0068]; figure 3 * | 1-15 | |
| A | US 2023/164660 A1 (CHEN YAN-TING [TW] ET AL) 25 May 2023 (2023-05-25) * paragraph [0005] - paragraph [0010] * * paragraph [0025] - paragraph [0029] * | 1-15 | |

TECHNICAL FIELDS
SEARCHED      (IPC)

H04W

The present search report has been drawn up for all claims

| Place of search | Date of completion of the search | Examiner |
|---|---|---|
| Munich | 11 March 2025 | Straniero, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 20 8400

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | Publication date |
|---|---|---|---|
| WO 2023097590 A1 | 08-06-2023 | US 2024284553 A1<br>WO 2023097590 A1 | 22-08-2024<br>08-06-2023 |
| US 2020383028 A1 | 03-12-2020 | CN 112020114 A<br>US 2020383028 A1 | 01-12-2020<br>03-12-2020 |
| US 2023164660 A1 | 25-05-2023 | CN 116437406 A<br>TW 202325065 A<br>US 2023164660 A1 | 14-07-2023<br>16-06-2023<br>25-05-2023 |

EPO FORM P0459

For more details about this annex : see Official Journal of the European Patent Office, No. 12/82